(19) Europäisches Patentamt / European Patent Office / Office européen des brevets

(11) **EP 3 158 672 B1**

(12) **FASCICULE DE BREVET EUROPEEN**

(45) Date de publication et mention
de la délivrance du brevet:
**21.07.2021 Bulletin 2021/29**

(21) Numéro de dépôt: **15732191.0**

(22) Date de dépôt: **19.06.2015**

(51) Int Cl.:
**H04K 1/00** *(2006.01)*    **H04K 1/02** *(2006.01)*

(86) Numéro de dépôt international:
**PCT/EP2015/063861**

(87) Numéro de publication internationale:
**WO 2015/193491 (23.12.2015 Gazette 2015/51)**

(54) **PROCÉDÉ ET SYSTÈME DE COMMUNICATIONS ACOUSTIQUES**

VERFAHREN UND SYSTEM FÜR AKUSTISCHE KOMMUNIKATION

METHOD AND SYSTEM FOR ACOUSTIC COMMUNICATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.06.2014 FR 1401400**

(43) Date de publication de la demande:
**26.04.2017 Bulletin 2017/17**

(73) Titulaire: **Thales
92400 Courbevoie (FR)**

(72) Inventeur: **PASSERIEUX, Jean-Michel
F-06903 Sophia-Antipolis Cédex (FR)**

(74) Mandataire: **Marks & Clerk France
Immeuble "Visium"
22, avenue Aristide Briand
94117 Arcueil Cedex (FR)**

(56) Documents cités:
**WO-A1-01/10071    US-A1- 2014 006 017**

- **JEAN-MICHEL PASSERIEUX: "STEALTH UNDERWATER ACOUSTIC COMMUNICATIONS BASED UPON STEGANOGRAPHY TECHNIQUES", UA2014 - 2ND INTERNATIONAL CONFERENCE AND EXHIBITION ON UNDERWATER ACOUSTICS, 22 juin 2014 (2014-06-22), pages 1199-1206, XP055182174,**

- **SONGZUO LIU ET AL: "Covert underwater acoustic communication using whale noise masking on DSSS signal", 2013 MTS/IEEE OCEANS - BERGEN, IEEE, 10 juin 2013 (2013-06-10), pages 1-6, XP032487823, DOI: 10.1109/OCEANS-BERGEN.2013.6608007**
- **Liu Songzuo, Liu Bingjie, Yin Yanling, Qiao Gang: "M-ray covert underwater acoustic communication by mimicking dolphin sounds", , 1 janvier 2014 (2014-01-01), XP055182096, Extrait de l'Internet: URL:http://oversea.cnki.net/kcms/detail/de tail.aspx?recid=&FileName=HEBG201401020&D b Name=CJFD2014&DbCode=CJFD&uid=WEEwN UF5TFFy b3NaeWtJPQ== [extrait le 2015-04-09]**
- **SONGZUO LIU ET AL: "Biologically inspired covert underwater acoustic communication using high frequency dolphin clicks", 2013 OCEANS - SAN DIEGO, MTS, 23 septembre 2013 (2013-09-23), pages 1-5, XP032567617,**
- **LIU SONGZUO ET AL: "Covert underwater acoustic communication using dolphin sounds", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 133, no. 4, 1 avril 2013 (2013-04-01) , pages EL300-EL306, XP012173323, ISSN: 0001-4966, DOI: 10.1121/1.4795219 [extrait le 2013-03-13]**
- **None**

**Description**

**Domaine de l'invention**

L'invention concerne de manière générale les communications acoustiques, et en particulier un procédé et un système de communications acoustiques sous-marines discret.

**Art antérieur**

Les systèmes de communications acoustiques sous-marines discrets émettent des signaux acoustiques de communication (flux audio) vers des récepteurs ciblés de telle sorte que ces signaux ne soient pas détectés par des tiers ou, s'ils sont détectés par des tiers, soient considérés par ceux-ci comme une composante anodine du bruit ambiant.
Plusieurs solutions ont été proposées dans le passé pour cacher de l'information dans un flux audio, par exemple pour y cacher de courts messages de type SMS (acronyme pour « Short Message Service » signifiant « Service de Messages courts ») comme par exemple les solutions décrites dans :

- Songzuo Liu et al, "Covert underwater acoustic communication using whale noise masking on DSSS signal", 2013 MTS/IEEE OCEANS - BERGEN, IEEE, 10 juin 2013;

- Liu Songzuo, Liu Bingjie, Yin Yanling, Qiao Gang, "M-ray covert underwater acoustic communication by mimicking delphin sounds", 1 janvier 2014.

L'information cachée ne peut alors être accédée que par les récepteurs ciblés qui sont équipés de boitier de décodage spécifiques.
Plus récemment, les éditeurs ou diffuseurs de musique ont mis au point plusieurs solutions permettant de cacher dans des fichiers audio de type .wav ou .mp3, des informations de copyright ou des marquages spécifiques destinés à servir de preuve en cas de piratage ou de diffusion non autorisée du contenu de ces fichiers. Ces solutions sont par exemple basées sur des techniques d'encodage telles que l'encodage des bits de poids faibles, l'ajout de signaux auxiliaires faibles en bande étroite ou d'échos. Leur application est principalement limitée à la transmission via des canaux de transmission peu bruités, sans doppler ni trajets multiples, et surtout uniquement à des canaux numériques comme décrit dans les articles suivants :

- N. Cvejic «Algorithms for audio watermarking and steganograpphy, Academic dissertation University of Oulu, 2004»,

- R. Walker, «Audio Watermaking, BBC R&D White Paper, WHP 057, August 2004»,

- K. Gopalan, «Audio steganography using bit modification, Proc. IEEE International Conférence on Acoustics, Speech, and Signal Processing, (ICASSP '03), Vol. 2, pp. 421-424, April 2003»,

- Gopalan, «Audio Steganography for Covert Data Transmission by Imperceptible Tone Insertion, Proc. the IASTED International Conférence on Communication Systems And Applications (CSA 2004), Banff, Canada, July 8-10, 2004».

Les systèmes de communication acoustiques discrets peuvent être basés sur des communications numériques. Selon une première approche, le système émet un signal porteur de l'information à un niveau très faible de manière à ne pas être détecté par un tiers. Le signal de communication présente alors un rapport signal-sur-bruit trop faible pour être détecté par un tiers. Toutes les solutions de ce type se caractérisent par un débit d'information relativement faible (faible efficacité spectrale, typiquement de l'ordre de quelques $10^{-1}$ bit/sec/Hz).
Plusieurs solutions ont été proposées selon cette première approche, comme par exemple des solutions basées sur des techniques d'étalement de spectre, comme par exemple dans J.G. Proakis, « Digital Communications, Mc Graw Hill, 4th édition, 2001». La connaissance de la séquence ou du code d'étalement utilisé, ainsi qu'un traitement adéquat, permettent alors la détection du signal émis par le destinataire du message seulement. Le destinataire du message peut alors en extraire l'information. Toutefois de telles solutions ne permettent d'atteindre qu'un débit faible. Par ailleurs, un tiers différent du destinataire ciblé pourrait détecter le signal de communication et identifier la séquence d'étalement en analysant des signaux reçus sur une longue durée (G. Burel, Détection of Spread Spectrum Transmission Using Fluctuations of Correlation Estimators, IEEE-ISPACS, Honolulu, Nov. 2000).
On connaît également une technique dérivée des solutions précédentes et basée sur l'utilisation de modulations OFDM (G. Leus and P. van Walree « Multiband OFDM for covert acoustic communications, IEEE Journal on Selected Areas in Communications, Vol. 26, N° 9, December 2008»). Il est possible que cette technique permette théoriquement d'exploiter les propriétés de cyclo-stationnarité des signaux OFDM pour les détecter et les identifier comme portant de l'information. Toutefois, cette détection requière des algorithmes lourds et la disponibilité de signaux longs.

Il existe encore une solution basée sur la première approche qui, au lieu d'utiliser comme séquence d'étalement une même séquence pseudo aléatoire répétée en boucle pendant la transmission, utilise une séquence chaotique, c'est-à-dire un bruit blanc généré par un oscillateur chaotique ou un signal aléatoire non périodique (Stéphane PENAUD, Philippe BOUYSSE, Jacques GUITTARD et al, Potentialités des séquences d'étalement chaotiques pour l'amélioration du TEEB d'un système DS-CDMA asynchrone, ANN. TELECOMMUN., 58, n ° 3-4. 2003).

Cette absence de périodicité rend impossible la détection du signal de communication selon les précédentes techniques. Néanmoins, elle pose des problèmes de synchronisation émetteur/récepteur qui rendent impossible son application à un système de communication simple et peu coûteux (en raison notamment de la nécessité de re-synchronisations fréquentes et peu discrètes, ou de la nécessité d'utiliser des horloges extrêmement précises, coûteuses et difficilement intégrables dans un "petit" système de communication acoustique).

D'autres solutions ont été proposées, selon une deuxième approche. Ces solutions consistent à émettre des signaux d'apparence anodine, par exemple des signaux pouvant être confondus avec des signaux de mammifères marins, de travaux sous-marins de bâtiments anodins, de bruit de mer (vague, vent, pluie, etc.) sans contraintes quant au niveau émis sous réserve de garder un niveau admissible et peu fort pour que le signal émis apparaisse bien naturel. Par exemple, une technique de ce type consiste à émettre des séquences de clics large bande ressemblant à des clics de dauphins, l'espacement entre les clics portant l'information à transmettre (H.S. Dols et al, « Covert underwater acoustic communication with marine mammals sounds, Proc. UDT Europe 2008 »). Cependant, avec de telles techniques, il est difficile de générer des signaux qui n'aient pas une allure synthétique (vraies vocalises ou clics de mammifères marins). Elles nécessitent en outre d'émettre des signaux compatibles avec le lieu et le moment de l'émission (par exemple, des signaux ressemblant à une espèce inconnue dans la zone de l'émetteur ne doivent pas être transmis, les craquements d'icebergs en Méditerranée ne doivent pas être simulés, etc.).

## Définition générale de l'invention

L'invention vient améliorer la situation. A cet effet, elle propose un dispositif émetteur, comprenant une antenne d'émission, l'antenne d'émission comprenant au moins un transducteur et une unité de génération de signal pour générer un signal de communication acoustique à émettre vers un dispositif récepteur incluant de l'information cachée. Avantageusement, l'unité de génération de signal est configurée pour enregistrer au préalable un signal acoustique d'origine correspondant à un élément du bruit ambiant et générer le signal de communication à émettre en ajoutant à un signal initial x(t), dérivé du signal d'origine, un signal auxiliaire préalablement multiplié par au moins un symbole, le symbole ayant une phase et/ou une amplitude portant l'information cachée et le signal auxiliaire étant calculé à partir du signal initial au moyen d'un opérateur de transformation choisi qui dépend d'une clé stéganographique.

Selon une caractéristique de l'invention, le signal initial dérivé du signal d'origine est le signal complexe en bande de base obtenu après filtrage du signal d'origine dans une bande de fréquences de largeur choisie, centrée sur une fréquence centrale.

Selon une autre caractéristique, l'unité de génération de signal est configurée pour diviser au préalable la durée totale du signal d'origine x(t) en un ensemble d'intervalles de temps successifs jointifs de même durée T, l'opérateur de transformation étant appliqué au signal initial sur chacun de ces intervalles pour calculer la valeur du signal auxiliaire correspondante sur l'intervalle. En particulier, le signal de communication généré y(t) à un instant t appartenant au n-ième intervalle [nT, (n+1)T] est égal à :

$$y(t) = x(t) + \alpha \cdot a_n \cdot \Psi(x)(t),$$

où a désigne un paramètre de gain et $a_n$ désigne le symbole correspondant au $n^{ième}$ intervalle.

Dans une première forme de réalisation, l'unité de génération de signal est en outre configurée pour diviser la durée totale du signal initial en un ensemble d'intervalles successifs jointifs de même durée T, et chaque intervalle de durée T en 2M sous-intervalles $U_{-M}$, ..., $U_{-1}$, $U_1$, ..,. $U_M$, séparés par des intervalles de garde, les sous-intervalles ayant des durées croissantes en fonction de la valeur absolue de k, l'opérateur de transformation étant appliqué au signal initial sur chaque sous-intervalle $U_k$ pour calculer la valeur du signal auxiliaire correspondante sur l'intervalle.

Dans cette forme de réalisation, la valeur du signal auxiliaire $\Psi(x)(T/2 + t)$ à un instant T/2 +t, avec t appartient à un sous-intervalle $U_k$, peut être fonction d'un paramètre de phase $\exp j.\beta_k$, avec $\beta_k$ compris dans l'intervalle [0, 2π] et k compris dans l'intervalle [-M,M], de la valeur d'une fonction de pondération d'amplitude p(t) à l'instant t, et de la valeur du signal initial à l'instant (T/2 - t).

En particulier, la valeur du signal auxiliaire $\Psi(x)(T/2 + t)$ à un instant T/2 +t, où t appartient à un sous-intervalle

$U_k$, peut être égale à :

$$\Psi(x)\ (T/2 + t) = \exp j.\beta_k\ .p(t)\ .\ x(T/2 - t).$$

La durée des intervalles de garde entre les sous-intervalles de temps successifs $U_k$ et $U_{k+1}$ peut être choisie de sorte que chacun des sous-intervalles $U_k$ ne recouvre pas ses voisins après dilatation/compression due à un phénomène doppler.

Dans une deuxième forme de réalisation, l'unité de génération de signal peut être en outre configurée pour diviser chaque intervalle de durée T en un ensemble de M sous-intervalles de même durée T/M, la valeur du signal auxiliaire sur un sous-intervalle de temps donné étant obtenue à partir de la valeur du signal initial sur un autre sous-intervalle.

En particulier, dans cette forme de réalisation, la valeur du signal auxiliaire à un instant t appartenant à sur un sous-intervalle de temps donné peut être obtenue à partir de la valeur du signal initial à l'instant -t sur un autre sous-intervalle (retournement temporel).

En complément, la valeur du signal auxiliaire à un instant t appartenant à un sous-intervalle de temps donné peut être obtenue à partir de la valeur du signal initial sur un autre sous-intervalle pondérée par la valeur d'une fonction de pondération d'amplitude p(t) à l'instant t.

L'invention propose en outre un dispositif récepteur comprenant une antenne de réception, l'antenne de réception comprenant au moins un hydrophone. Le dispositif récepteur comprend également un détecteur pour détecter un signal de communication émis par un dispositif émetteur selon l'une des caractéristiques précédentes et une unité d'extraction configurée pour reconstituer le signal auxiliaire en appliquant ledit opérateur de transformation au signal de communication détecté à partir de la clé stéganographique, et pour extraire l'information cachée à partir de la phase et/ou de l'amplitude du signal auxiliaire reconstruit.

L'unité d'extraction peut être en outre configurée pour appliquer un filtre au signal reconstitué à partir d'un terme de compensation $e^{-i\widehat{\theta}u}$ propre à compenser le résidu de la porteuse correspondant à l'écart entre la fréquence porteuse avec doppler et la fréquence porteuse nominale, le terme de compensation étant estimé en maximisant, à chaque instant t, le module de la sortie z(t) du filtre pour un ensemble de valeurs possibles de $\theta$. La fonction d'extraction est alors apte à déterminer les symboles et les bits de l'information cachée à partir des phases du signal z(t) calculées à des instants correspondants aux maximas du module du signal z(t).

L'invention propose en outre un système de communication comprenant un dispositif émetteur et un dispositif récepteur selon l'une des caractéristiques précédentes.

L'invention propose également un procédé d'émission pour générer un signal de communication acoustique à émettre dans un dispositif émetteur (101), comprenant une antenne d'émission, l'antenne d'émission comprenant au moins un transducteur, le procédé comprenant les étapes suivantes :

    a. enregistrer un signal acoustique d'origine ;

    b. ajouter à un signal initial x(t), dérivé du signal d'origine, un signal auxiliaire multiplié par au moins un symbole, le symbole ayant une phase et/ou une amplitude portant l'information cachée et le signal auxiliaire étant calculé à partir du signal initial au moyen d'un opérateur de transformation choisi qui dépend d'une clé stéganographique, ce qui fournit un signal de communication,

    c. émettre un signal vers un dispositif récepteur à partir du signal de communication obtenu à l'étape b.

Le signal émis peut ainsi apparaître à un tiers parfaitement naturel à la différence d'un signal synthétique trop régulier. Il est en outre toujours bien adapté à la zone et au moment de l'émission.

Cette solution est applicable à tous types de signaux, avec des performances variables en termes de débits possibles. Elle s'adapte notamment à un environnement fortement bruité.

## Description des figures

D'autres caractéristiques et avantages de l'invention apparaîtront à l'aide de la description qui suit et des figures des dessins annexés dans lesquels:

- La figure 1 est un schéma représentant le système de communication acoustiques certains modes de réalisation de l'invention ;

- La figure 2 est un organigramme représentant le procédé d'émission selon certains modes de réalisation de l'invention ;
- La figure 3 est une représentation schématique illustrant le découpage de l'intervalle T en 2M sous-intervalles ;
- La figure 4 est un schéma illustrant la construction du signal auxiliaire au moyen de l'opérateur de transformation selon le premier exemple de réalisation
- Les figures 5 et 6 sont des schémas représentant respectivement un signal initial et le signal modifié correspondant avec insertion de 16 bits, selon un exemple de réalisation;
- Les figures 7 et 8 sont des schémas représentant respectivement un signal initial et le signal modifié correspondant avec insertion de 50 bits, selon un exemple de réalisation;
- La figure 9 est un organigramme représentant le procédé de réception, selon certains modes de réalisation de l'invention ;
- Les figures 10 et 11 sont des schémas représentant respectivement la réponse d'impulsion dans un canal acoustique en fonction du temps et le profil de retard de puissance en fonction du retard, obtenus pour un signal dans un canal acoustique sous-marin simulé ;
- Les figures 12 et 13 représentent des exemples de sorties obtenues avec le procédé de réception, pour deux exemples de signaux initiaux différents ;
- La figure 14 représente les symboles détectés pour l'exemple de la figure 12 ;
- La figure 15 représente les symboles détectés pour l'exemple de la figure 13 ;
- La figure 16 est un schéma illustrant la construction du signal auxiliaire au moyen de l'opérateur de transformation selon le deuxième exemple de réalisation ;
- la figure 17 représente un spectrogramme du signal audio original pour un exemple d'enregistrement de clics,
- La figure 18 représente le signal audio modifié porteur de 8 bits d'information correspondant au signal audio original de la figure 17 ; et
- La figure 19 représente la sortie du récepteur, dans l'exemple de signal de la figure 14, en fonction du temps de la corrélation du signal reçu avec le signal auxiliaire porteur de l'information.

Les dessins pourront non seulement servir à mieux faire comprendre la description, mais aussi contribuer à la définition de l'invention, le cas échéant.

## Description détaillée

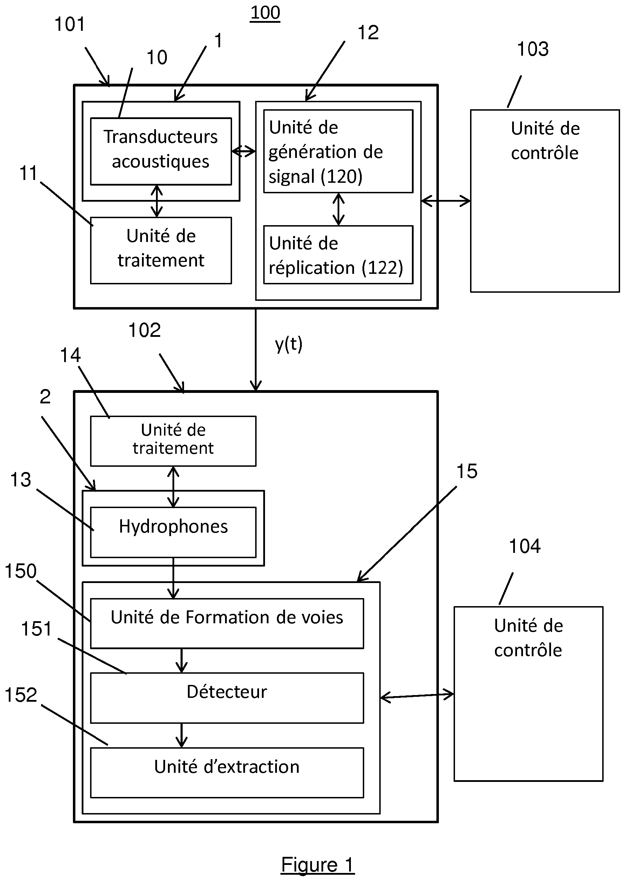

La figure 1 représente un système de communication 100 sous-marine numérique discret, selon certains modes de réalisation de l'invention, configuré pour émettre un signal comprenant de l'information cachée entre un émetteur et un récepteur cible.

Le système de communication 100 comprend un dispositif d'émission 101 prévu au niveau de l'émetteur pour émettre un signal de communication et un dispositif de réception 102, prévu au niveau du récepteur, pour recevoir le signal émis.

Le dispositif d'émission 101 est configuré pour émettre un signal acoustique d'origine, préalablement enregistré et modifié de manière à porter de l'information cachée, en ajoutant à un signal initial $x(t)$ dérivé du signal d'origine un signal $q(t)$ qui dépend :

- d'un signal auxiliaire, noté $\Psi(x)(t)$, calculé à partir du signal initial $x(t)$ au moyen d'un opérateur de transformation $\Psi$ (par exemple choisi par l'émetteur); et
- d'un symbole $a_n$ comprenant une amplitude et ou une phase portant l'information cachée.

Tel qu'utilisé ici, le signal acoustique d'origine désigne un signal acoustique provenant d'une source naturelle. Dans la suite de la description, le signal acoustique d'origine sera également désigné par l'expression « signal d'origine ». Le signal acoustique d'origine peut être un morceau de bruit ambiant d'allure anodine. Ce morceau de bruit ambiant anodin peut être par exemple un bruit de mammifère marin présent sur la zone, un bruit de pluie ou de vague, ou encore le bruit rayonné par un chalutier inoffensif, etc.

Les signaux $x(t)$, $q(t)$ et $\Psi(x)(t)$ varient en fonction du temps $t$.

L'amplitude du signal ajouté $q(t)$ correspond à l'amplitude du symbole et peut être en particulier faible par rapport à l'amplitude du signal initial de manière à rester imperceptible par des tiers.

Le dispositif de réception 102 est capable de reconstituer le signal auxiliaire de manière approchée, en appliquant le même opérateur de transformation $\Psi$ au signal reçu, en détectant le signal auxiliaire au moyen d'un filtre adapté et en extrayant l'information à partir de la phase et/ou de l'amplitude du symbole.

Plus précisément, le dispositif d'émission 101 comprend une antenne d'émission 1 comprenant un transducteur acoustique ou une pluralité de transducteurs acoustiques 10 si l'émission est directive. La directivité de l'émission permet d'améliorer la discrétion dans le cas où l'émetteur sait, même de manière approximative, où se trouve le récepteur.

Le dispositif d'émission 101 peut comprendre en outre des unités de traitement 11 associées à chaque transducteur 10 comme par exemple des convertisseurs numériques/analogiques, des amplificateurs de puissance, des circuits d'accord/adaptation associés à chacun des transducteurs. Certaines de ces unités de traitement peuvent être directement incluses dans l'antenne d'émission.

Le dispositif d'émission 101 peut comprendre en outre un calculateur 12 équipé d'une unité de génération d'un signal 120 configurée pour générer un signal audio à émettre correspondant au signal initial modifié avec information cachée. Le calculateur 12 peut en outre comprendre des unités de réplication 122 configurées pour générer des répliques du signal à transmettre par chacun des transducteurs d'émission (formation de voies). La formation de voies à l'émission peut permettre d'améliorer la discrétion de manière significative. En effet, la formation des voies peut être utilisée pour émettre préférentiellement dans un secteur angulaire comprenant le récepteur, ce qui réduit la possibilité d'une interception par un tiers situé hors de ce secteur (avec les limitations dues aux lobes secondaires à l'émission).

Spécifiquement, l'unité de génération de signal 120 peut être configurée pour diviser un signal enregistré en blocs temporels successifs et jointifs, de longueur fixe T. Sur chaque bloc, l'unité de génération de signal 120 peut alors calculer à partir du signal initial x(t), pour t appartenant à [0, T], un signal auxiliaire noté $\Psi(x)(t)$ (t appartenant à [0, T]), au moyen de l'opérateur de transformation $\Psi$. Ce signal auxiliaire est multiplié par un symbole $a_n$ qui comprend une phase et/ou une amplitude qui dépend de l'information à transmettre (information cachée). Il peut être aussi multiplié par un gain $\alpha$ choisi pour l'atténuer, dans certains modes de réalisation (le signal résultant q(t) est alors égal à q(t)= $\alpha$. $a_n.\Psi(x)(t)$). Le signal résultant q(t) peut alors ajouté au signal initial x(t).

Le dispositif de réception 102 comprend une antenne de réception 2 comprenant un ou plusieurs hydrophones 13, chaque hydrophone étant associé à des unités de traitement 14 tels que des préamplificateurs et convertisseurs analogiques/numériques. Certaines de ces unités de traitement 14 peuvent être directement incluses dans l'antenne d'émission.

Le dispositif de réception 102 peut comprendre en outre un calculateur 15 comprenant une unité de formations de voies 150 pour former des voies dans la ou les directions où est susceptible de se trouver l'émetteur (par exemple dans tout l'horizon en l'absence d'information à priori sur la position de l'émetteur, une voie unique pouvant couvrir tout l'horizon si le système de réception est équipé d'un seul hydrophone à la réception). Le calculateur 15 peut en outre comprendre un détecteur 151 pour détecter la présence de l'information cachée dans les signaux en sortie de formation de voies et une unité d'extraction 152 pour extraire l'information cachée dans le signal détecté par le détecteur 151.

L'unité d'extraction 152 peut être configurée pour générer, à partir du signal reçu y(t) et sur une fenêtre glissante de longueur T, une version approximée du signal auxiliaire en appliquant le même opérateur de transformation, soit $\{\Psi(y)(t), t = 0, T\}$. Il est à noter que l'approximation du signal auxiliaire (encore appelé « signal auxiliaire reconstitué ») peut être d'autant plus précise que le signal auxiliaire a été atténué par le gain $\alpha$ avant d'être ajouté à l'émission. L'unité d'extraction 152 peut calculer ensuite le produit scalaire entre le signal reçu y(t) et le signal auxiliaire reconstitué, puis déterminer sa phase, ce qui fournit l'information binaire transmise (information cachée), sous forme par exemple d'un bit si une modulation BPSK a été employée à l'émission, ou de deux bits si c'est une modulation QPSK.

Dans un canal de transmission idéal (stationnaire et sans trajets multiples), le signal résultant du produit scalaire sur fenêtre glissante de durée T présente des pics séparés d'un intervalle de temps T. La forme de tels pics et leur finesse peuvent dépendre de la fonction d'auto-corrélation du signal auxiliaire. Dans un canal réel, des pics ont été observés dont la forme correspond au produit de convolution de la fonction d'auto-corrélation de la réponse impulsionnelle h(t) du canal acoustique (soit $C_h(\zeta) = \int h(\zeta-t) h(t) dt$) et de celle du signal auxiliaire.

Dans certains modes de réalisation, l'unité de génération de signal 120 peut opérer dans une bande de fréquence limitée, qui peut être choisie en fonction des caractéristiques du signal initial x(t). Par ailleurs, le signal dérivé du signal initial à partir duquel est déterminé le signal auxiliaire $\Psi(x)(t)$ peut être le signal complexe obtenu après démodulation du signal initial autour d'une fréquence centrale ou porteuse nominale et dans une bande de fréquences B donnée. Une fois le signal q(t) ajouté au signal initial (ce qui fournit un signal y(t)), le signal à émettre peut alors être obtenu en modulant le signal y(t) par la porteuse nominale puis en prenant la partie réelle du signal ainsi modulé. Dans un tel mode de réalisation, à la réception, avant d'extraire l'information, l'unité d'extraction 152 démodule le signal reçu autour de la fréquence porteuse nominale et dans la bande de fréquences B.

Le système de communication 100 peut en outre comprendre une unité de contrôle 103 associé au calculateur 12 et une unité de contrôle 104 associé au calculateur 15. Chaque unité de contrôle 103 et 104 peut comprendre des Interfaces Homme Machine IHM et des périphériques d'entrée et/ou sortie, comme par exemple un écran et/ou un clavier, pour permettre la saisie ou l'affichage de messages ou d'information à transmettre ou reçus. En variante, une seule unité de contrôle commune couplée à la fois au dispositif émetteur 101 et au dispositif récepteur 102 peut être utilisée. Les unités de contrôle (103, 104) peuvent permettre également de contrôler et de configurer les dispositifs d'émission et de réception 101 et 102.

Le système de communication 100 forme ainsi un système acoustique discret permettant d'inclure dans le signal émis de l'information cachée, comme par exemple des messages tactiques courts de quelques dizaines d'octets (SMS, mail, trigrammes prédéfinis, etc.).

L'information peut être cachée dans l'amplitude du symbole $a_n$ et/ou dans sa phase lorsque la quantité d'information est plus importante.

Ainsi, le système de communication 100 est capable d'émettre des émissions acoustiques qui, si elles sont interceptées par des récepteurs non ciblées, ne permettent pas la détection de l'émetteur.

Par exemple, l'émetteur peut être un sous-marin équipé du dispositif émetteur 101 pour transmettre des signaux de communication à des récepteurs de type bâtiments « amis », sans que ces émissions ne permettent la détection du sous-marin par un tiers hostile. Les signaux de communication peuvent être émis par des sonars actifs agencés sur le sous-marin et inclure tout type d'information.

Le système de communication 100 n'est toutefois pas limité à une utilisation dans un sous-marin et peut être utilisé dans différents types d'applications, comme par exemple dans des systèmes IFF (acronyme pour « Identification Friend or Foe » signifiant reconnaissance ami/ennemi), dans des systèmes de communications sans fil avec des Robots sous-marin autonomes (AUV, acronyme pour « Autonomous Underwater Vehicle »), sur des planeurs, sur des plongeurs ou encore sur des objets équipés de capteurs posés sur le fond marin.

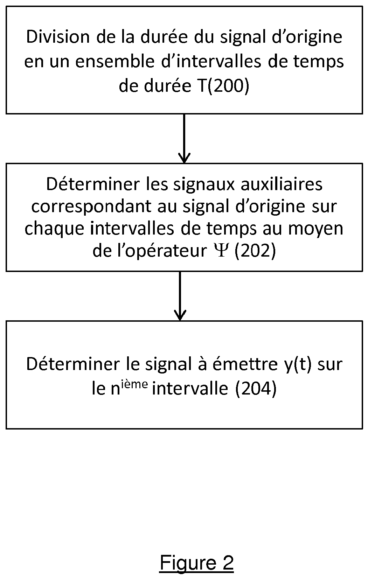

La figure 2 est un organigramme décrivant le procédé d'émission d'un signal audio par l'émetteur, selon certains modes de réalisation.

Le signal d'origine correspond à un élément anodin du bruit ambiant enregistré au préalable.

Dans la première étape 200 du procédé d'émission, la durée totale d'un signal initial x(t), dérivé du signal d'origine par une opération élémentaire (par exemple filtrage passe-bande), est divisée en un ensemble d'intervalles successifs jointifs et sans recouvrement, de même durée T, par exemple de l'ordre de quelques centaines de ms.

A l'étape 202, l'opérateur de transformation Ψ est appliqué au signal initial sur chacun de ces intervalles. L'opérateur de transformation Ψ calcule, à partir du signal initial x(t), un signal auxiliaire de même durée T et d'énergie sensiblement identique (au moins approximativement), dans la même bande de fréquence.

A l'étape 204, le signal à émettre sur le $n^{ième}$ intervalle [nT, (n+1).T], noté y(t), est déterminé en fonction du signal initial x(t), du signal auxiliaire Ψ(x)(t) et du symbole $a_n$. En particulier, le signal y(t) peut être obtenu en ajoutant au signal initial le signal q(t), ce signal q(t) dépendant du produit entre le signal auxiliaire Ψ(x)(t) et le symbole $a_n$. Dans un mode de réalisation, le signal à émettre sur le $n^{ième}$ intervalle [nT, (n+1).T], noté y(t), est choisi égal à :

$$y(t) = x(t) + \alpha . a_n . \Psi(x)(t) \quad \text{(Equation 1)}$$

Dans l'équation 1 :

- $\alpha . a_n . \Psi(x)(t)$ correspond au signal ajouté q(t),
- $a_n$ désigne un symbole d'information transmis sur l'intervalle (par exemple. $a_n = \pm 1$) si une modulation binaire à deux états de phase BPSK est utilisée, et
- $\alpha$ désigne un gain < 1, choisi suffisamment faible pour que le signal y(t) soit proche du signal initial x(t).

Le signal initial x(t) dérivé du signal d'origine peut correspondre au signal complexe en bande de base, obtenu après filtrage du signal initial x(t) dans une bande de fréquence de largeur B centrée sur une fréquence centrale ou porteuse Fc. L'utilisation d'un tel signal dérivé permet d'utiliser d'autres types de modulations à plus de deux états de phase, avec une meilleure efficacité spectrale que la modulation BPSK, comme par exemple des modulations QPSK, QAM16, QAM64, ce qui augmente le débit atteignable.

Selon une autre caractéristique, les symboles $a_n$ peuvent être basés sur un codage différentiel (DPSK), ce qui présente des avantages en termes de robustesse dans un environnement difficile. En variante, il est également possible de transmettre un ou plusieurs symboles connus afin de pouvoir identifier et compenser la phase du canal acoustique (poursuite et égalisation de phase).

En variante, le signal initial x(t) dérivé du signal d'origine peut correspondre au signal d'origine réel. Dans ce cas, l'équation 1 peut être appliquée en ajoutant l'amplitude du signal initial x(t) à l'amplitude relative du signal auxiliaire préalablement multipliée par le module des symboles $a_n$ portant l'information cachée, et le cas échéant par le gain a. L'utilisation de l'amplitude permet d'augmenter les débits de manière significative en utilisant des constellations de type QAM, par exemple QAM16 ou QAM 64, avec 4 ou 6 bits par symboles.

Pour réduire le taux d'erreur binaire, des méthodes de codages de canal peuvent être appliquées, comme par exemple une technique de code correcteur d'erreur telles que le code Reed-Solomon ou les codes convolutifs, avec entrelacement et/ou brouillage des bits à émettre par application d'un xor avec une séquence pseudo-aléatoire longue et connue pour limiter les problèmes liés à l'émission de longues séquences de 0 ou de 1.

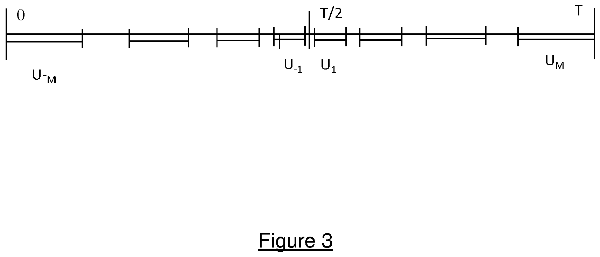

Dans une première forme de réalisation des étapes de division et d'association 200 et 204, chaque intervalle de temps de durée T peut être encore divisé en 2M sous-intervalles, notés $U_{-M}$, ..., $U_{-1}$, $U_1$, ..,. $U_M$, séparés par de courts intervalles de garde (par exemple de l'ordre du 1/10 de la durée des intervalles $U_k$), avec des durées croissant avec |k|, comme illustré sur le schéma de la figure 3.

A l'étape 202, l'opérateur Ψ est alors choisi tel que la valeur du signal auxiliaire Ψ(x) (t) sur chaque sous-intervalle $U_k$ (pour t ∈ à $U_k$) dépend :

- de la valeur du signal initial x(t) sur le sous-intervalle $U_{-k}$ (et réciproquement), après retournement temporel (en remplaçant t par-t),
- d'une phase exp j.$β_k$., et
- d'une fonction de pondération d'amplitude p(t).

En particulier, la valeur du signal auxiliaire Ψ(x)() à un instant (T/2 +t) pour t appartenant à un sous intervalle $U_k$ (pour t ∈ à $U_k$) peut être fonction du produit entre la valeur du signal initial x() à l'instant (T/2 -t), de la phase exp j.$β_k$., et de la valeur de la fonction de pondération d'amplitude p() à l'instant t. Dans un mode de réalisation, le signal auxiliaire est obtenu selon l'équation 2 ci-dessous :

$$Ψ(x) \ (T/2 + t) = \exp j.β_k \ .p(t) \ . \ x(T/2 - t) \ , \ \text{si } t ∈ U_k \quad \text{(Equation 2).}$$

Le signal x(T/2 - t) est égal au signal x(T/2 + t) après application d'un retournement temporel autour de l'instant de référence T/2.

La pondération d'amplitude p(t) de l'équation 2 peut correspondre par exemple à une pondération de type Tuckey sur une durée de temps égale à la durée du sous-intervalle considéré $U_k$, avec un front de montée et de descente de durée de l'ordre de 5%. Une telle pondération permet d'éviter l'apparition d'un transitoire large bande à chaque transition entre sous-intervalles ce qui nuirait à la discrétion de la transmission.

Dans les modes de réalisation où la fonction de pondération p(t) est une pondération de Tuckey, la pondération peut être définie sur l'intervalle [0,T] par les équations suivantes :

| | | | |
|---|---|---|---|
| p(t) | = | $\sin^2 (π. t / (2 r T))$ | si $0 ≤ t < rT$ |
| p(t) | = | 1 | si $rT ≤ t < (1-r) T$ |
| p(t) | = | $\sin^2 (π . (T-t) / (2 r T))$ | si $(1-r).T ≤ t < T$ |

Dans les équations ci-dessus, le paramètre r désigne un paramètre (notamment pris entre 0 et 0.5) qui permet d'ajuster la largeur des fronts de montée et descente de la fonction de pondération. Par exemple, le paramètre r peut être pris égal à 0.05.

Les termes de phases « exp j.$β_k$ » de l'équation 2, avec k compris dans l'intervalle [-M, M], et $β_k$ compris dans l'intervalle [0, 2π] sont utilisés pour brouiller le signal auxiliaire Ψ(x)(t), rendre sa reconstruction, et sa détection impossible par un tiers qui ne les connaîtrait pas. Ils constituent ainsi la clé stéganographique du système de communication (ici par exemple une clé de longueur 2M) nécessaire pour retrouver l'information cachée.

Dans un exemple de réalisation, le paramètre de phase exp j.$β_k$ peut être limité à deux valeurs -1 et/ou +1.

Il doit être noté que pour exp j$β_k$ = 1 (k appartenant à [-M, M]), le signal auxiliaire Ψ(x) (t) sur l'intervalle [nT, n+1T] correspond à une copie retournée temporellement du signal initial sur ce même intervalle.

En plus de ses propriétés satisfaisantes en termes de discrétion, cet opérateur de transformation Ψ conduit à un système relativement robuste au doppler, pour des longueurs des sous-intervalles $U_k$ et des intervalles de garde choisis. Par exemple, pour un doppler constant (autrement dit un facteur de dilatation temporel q = 1 + V/c, avec V désignant la vitesse radiale de l'émetteur/récepteur, et c désignant la célérité du son), les signaux sont déformés de manière identique sur les sous-intervalles $U_k$ et $U_{-k}$ (le système est donc robuste au doppler). Les intervalles de garde, correspondant aux espaces entre les sous-intervalles $U_k$ et $U_{k+1}$, peuvent être choisis de sorte que chacun des sous-intervalles $U_k$, après dilatation et/ou compression due au doppler ne recouvre pas ses voisins. Le système peut alors être rendu robuste au doppler en compensant à la réception la différence entre la valeur de la fréquence porteuse nominale, Fc, et celle de la porteuse affectée par le Doppler, « q. Fc ».

Différents types d'opérateurs de transformation Ψ résultant de permutations quelconques entre les signaux sur les sous-intervalles $U_k$, avec ou sans retournement temporel sur chaque sous-intervalle peuvent aussi être choisis. Avec de tels opérateurs de transformation Ψ, il peut être utile de compenser le résidu de la fréquence porteuse ainsi que la compression/dilation résultant du doppler.

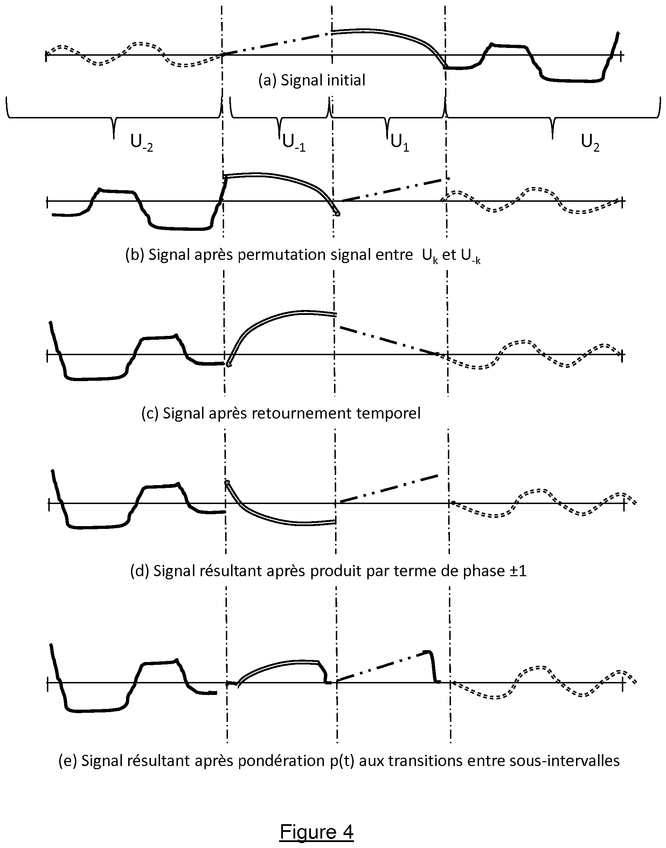

La figure 4 illustre un exemple de réalisation des étapes 200 et 202, selon la première forme de réalisation. Cette figure montre :

(a) le signal initial x(t) sur un intervalle de durée T, divisé ici en quatre sous-intervalles $U_{-2}$, $U_{-1}$, $U_1$, $U_2$,

(b) le signal après permutation des signaux sur $U_{-2}$ et $U_2$, puis $U_{-1}$ et $U_1$,

(c) le signal après retournement temporel du signal sur l'ensemble des sous-intervalles $U_k$,

(d) le signal résultant après multiplication par les termes de phase qui constituent la clé stéganographique, ici (1, -1, -1, 1),

(e) le signal après application d'une pondération p(t) pendant les intervalles de garde aux transitions entre sous-intervalles.

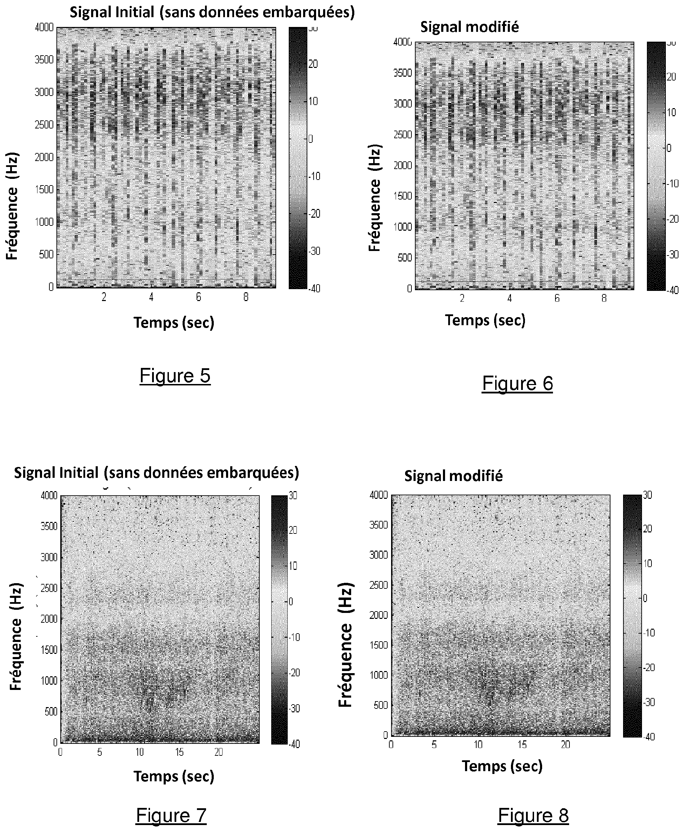

Les figures 5 et 6 montrent des exemples de résultats obtenus en appliquant le procédé d'émission de la figure 2, selon la première forme de réalisation, pour des signaux recueillis en mer correspondant à une séquence de 10 secondes de clics de cachalot. Les figures 7 et 8 montrent d'autres exemples de résultats obtenus en appliquant le procédé d'émission de la figure 2, selon la première forme de réalisation, pour des signaux recueillis en mer correspondant à une séquence de 25 secondes de bruit de pluie.

Plus particulièrement, les figures 5 et 7 représentent le signal original x(t) dans chacun des cas (clics de cachalot et bruits de pluie) tandis que les figures 6 et 8 représentent respectivement les signaux modifiés correspondants obtenus par addition du signal auxiliaire avec ajout d'information cachée (par multiplication du signal auxiliaire par le symbole $a_n$). Dans les deux exemples considérés, l'information a été ajoutée dans la bande 1500-3000 Hz, avec un débit égal à 2 bits/sec, avec une période T de 0.5 seconde, une modulation BPSK (acronyme pour « Binary-phase shift Keying » signifiant « par changement de phase binaire »), sans code correcteur d'erreur, et un gain $\alpha$ pris égal à -10 dB.

Il peut être observé que les sonagrammes des signaux initiaux et modifiés sont quasiment indiscernables, ce qui montre le caractère discret de la modulation.

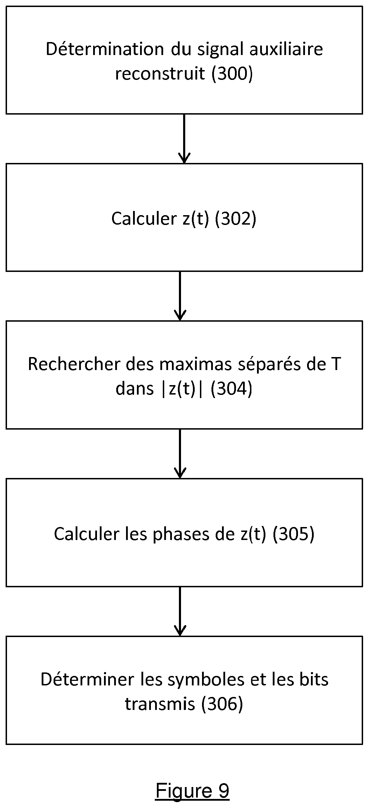

La figure 9 est un organigramme décrivant le procédé de réception du signal émis, selon certains modes de réalisation.

Le signal reçu par le récepteur peut être avantageusement exploité, si le signal auxiliaire est ajouté à un faible niveau par rapport au signal initial. Ce faible niveau permet de calculer une approximation efficace du signal auxiliaire, de le détecter et de retrouver l'information cachée par un filtrage adapté.

A l'étape 300, une approximation du signal auxiliaire reçu $\Psi(x)$ (t) (encore appelé ci-après « signal auxiliaire reconstruit ») est déterminée en calculant $\Psi(y)$ (t).

A l'étape 302, une quantité z(t) est calculée en appliquant un filtre adapté au signal auxiliaire reconstitué $\Psi(x)(t)$, le signal auxiliaire étant échantillonné temporellement à Fe > 2B selon le critère de Nyquist. La quantité z(t) est donnée par l'équation 3 ci-dessous :

$$z(t) \triangleq \int_0^T [\Psi(y)(u)]^*.(u)y(u).e^{-2i\widehat{\theta u}}\, du \qquad \text{(Equation 3)}$$

Dans l'équation 3, le terme $e^{-2i\widehat{\theta u}}$ est introduit pour compenser le résidu de porteuse Fc.V/c (correspondant à l'écart entre la fréquence porteuse avec doppler Fc (1+V/c) et la fréquence porteuse nominale Fc). Ce terme $e^{-2i\widehat{\theta u}}$ est estimé en maximisant à chaque instant le module de la quantité z(t) pour un ensemble de 2.R+1 de valeurs possibles de $\theta$, notées $\theta_r$, selon l'équation 4 suivante :

$\theta_r = 2\pi.r.$ Fc. $\Delta$V/c pour - R $\leq$ r $\leq$ R,

Dans l'équation 4 :

- $\Delta$V désigne le pas entre vitesses possibles du maillage en vitesse ;
- c désigne la célérité du son.

A l'étape 304, des maximas séparés de T sont recherchés dans le module du signal z(t) (le module de z(t) est noté |z(t)|), avec une tolérance qui peut être fonction du doppler maximal.

A l'étape 305, les phases du signal z(t) sont calculées aux instants correspondant à ces maximas.

A l'étape 306, les symboles et les bits transmis sont déterminés à partir des phases calculées à l'étape 305, ce qui fournit l'information cachée.

Le procédé de réception peut en complément comprendre une étape de synchronisation basée sur la recherche et l'extraction de pics de corrélation à une fréquence proche de la fréquence attendue pour les pics, égale à 1/T (par exemple avec une tolérance fonction du doppler maximal attendu).

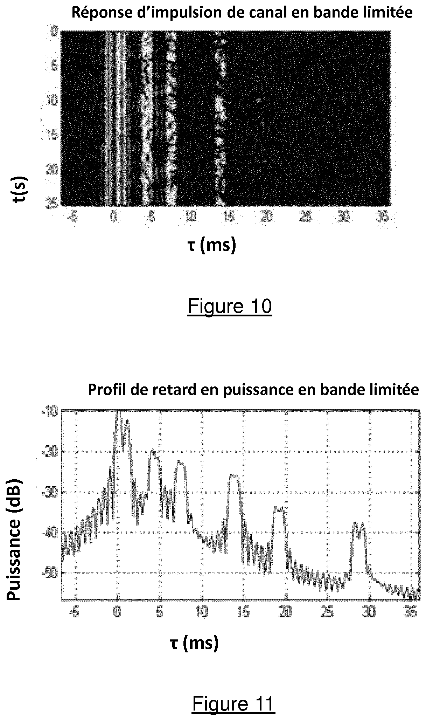

Les figures 10 et 11 illustrent les étapes 302 à 306 pour un exemple de réalisation où un signal d'origine a été simulé dans un canal acoustique doublement étalé (en temps et fréquence). Le canal acoustique a été simulé avec les paramètres de simulation suivants :

- Fréquence porteuse: 2250 Hz - Bande : [1500-3000] Hz,
- Distance émetteur/récepteur : 5000 m
- Hauteur d'eau 100 m (fond plat)
- Immersion émetteur et récepteurs égales à 5 et 60 mètres
- Etalement doppler : 0.5 Hz

Un tel canal acoustique simulé correspond à un canal acoustique sous-marin typique en environnement côtier, moyennement difficile pour les communications acoustiques.

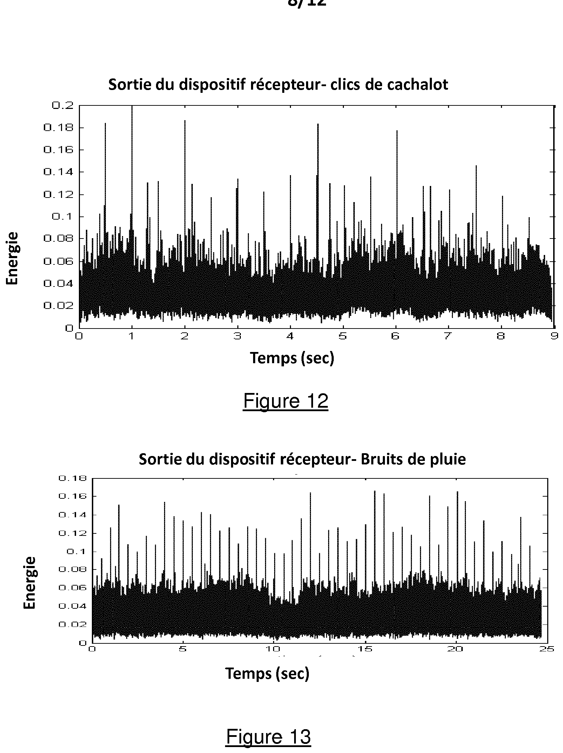

Le résultat de l'étape 302 est représenté sur les figures 12 et 13, en module, pour les deux exemples de signaux initiaux considérés sur les figures 5 à 8 (clics de cachalot et bruit de pluie), après propagation dans le canal acoustique et addition d'un bruit additif blanc gaussien blanc, avec un rapport signal-sur bruit égal à 0 dB dans la bande de fréquences 1500-3000Hz où l'information est transmise. Le rapport signal-sur-bruit est égal au rapport des énergies du signal acoustique total et du bruit. Le rapport signal utile-sur-bruit, c'est à dire énergie du signal auxiliaire ajouté, avec le gain $\alpha < 1$, porteur de l'information peut être plus faible. Dans les exemples des figures 12 et 13, un doppler non nul, pour une vitesse radiale égale à 1.7 m/s, a été simulé en ré-échantillonnant le signal émis avant passage dans le canal et ajout du bruit gaussien.

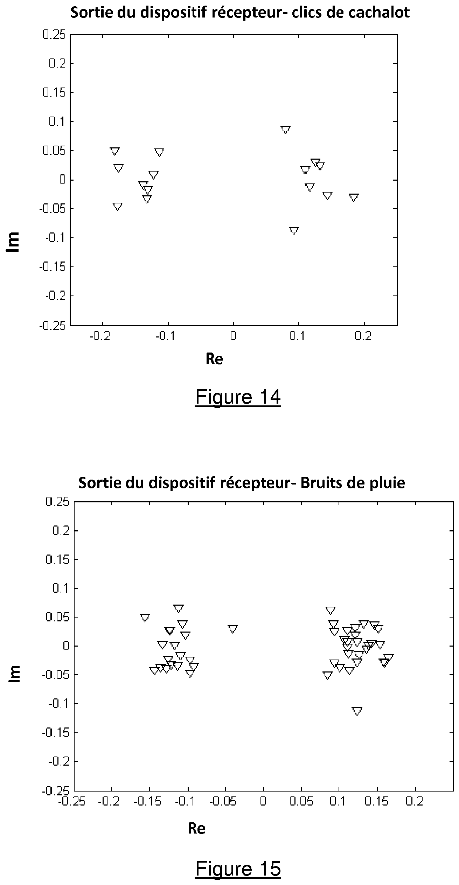

Les figures 14 et 15 illustrent les symboles estimés obtenus à l'étape 306, après synchronisation et compensation du déphasage dû au canal, selon un exemple de réalisation utilisant un symbole connu émis au début de la transmission.

Il peut être observé que les symboles sont correctement estimés, le message transmis (de 16 bits pour la figure 14 ou de 50 bits pour la figure 15) étant récupéré sans erreur.

Dans une deuxième forme de réalisation des étapes de division et d'association 200 et 204, l'intervalle T est divisé en M sous-intervalles de même durée T/M (étape 200). A partir du signal sur chaque intervalle T, le signal auxiliaire $\Psi(x)$ (t) peut être ensuite déterminé (étape 202) à partir du signal initial x(t) au moyen d'une ou plusieurs permutations quelconques entre les morceaux du signal initial sur les sous-intervalles (i.e. la valeur du signal auxiliaire sur un sous-intervalle de temps donné est obtenue à partir de la valeur du signal initial sur un autre sous-intervalle), retournés temporellement ou non pour chaque sous-intervalle (i.e. la valeur du signal auxiliaire à un instant t appartenant à sur un sous-intervalle de temps donné peut être obtenue à partir de la valeur du signal initial à l'instant -t sur un autre sous-intervalle). Les permutations et les retournements temporels appliqués constituent alors la clé stéganographique du système, qui peut être plus riche ou longue que pour dans la première forme de réalisation de l'étape d'association 202.

L'étape 204 peut ensuite être mise en œuvre comme décrit précédemment en relation avec la figure 2 (ajout du signal auxiliaire multiplié par le symbole dont l'amplitude et/ou la phase porte l'information et le cas échéant par un gain a). Par ailleurs, le procédé de réception, tel que décrit en relation avec la figure 9, peut être appliqué similairement dans cette deuxième forme de réalisation.

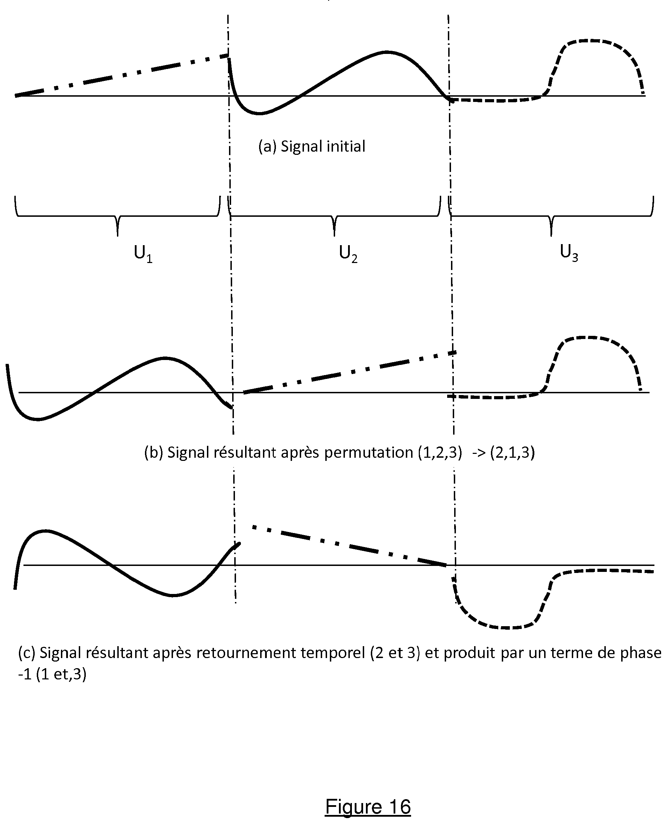

La figure 16 illustre un exemple de réalisation des étapes 200 et 202, selon la deuxième forme de réalisation. Cette figure montre :

(a) le signal initial x(t) sur un intervalle de durée T, divisé en trois sous-intervalles $U_1$, $U_2$, $U_3$,
(b) le signal après permutation des signaux sur les sous-intervalles : le signal sur $U_1$ est permuté avec le tronçon de signal sur $U_2$, le signal sur $U_2$ est permuté avec le tronçon de signal sur $U_1$, et le signal sur $U_3$ est permuté avec le tronçon de signal sur $U_3$ (la permutation peut alors être notée $(1,2,3) \rightarrow (2,1,3)$)
(c) le signal après retournement temporel sur les sous intervalles 2 et 3, puis produit par les termes de phase (-1, 1, -1).

Les opérations successives b et c permettent d'obtenir le signal auxiliaire $\Psi(x)$(t).

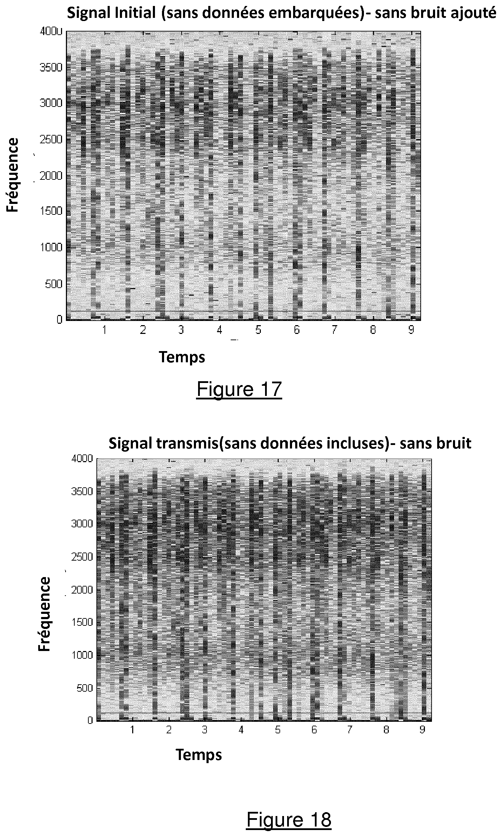

Un exemple d'application de la deuxième forme de réalisation est représenté sur les figures 17 et 18. Dans cet exemple, l'émetteur et le récepteur sont fixes, le canal est idéal, et le signal initial (représenté sur la figure 17) correspond à l'enregistrement de clics de cachalot de 8 secondes. Chaque intervalle de 1 seconde a été divisé en 32 sous-intervalles entre lesquels le signal a été permuté comme expliqué ci-dessus.

Les résultats obtenus apparaissant sur les figures 17 et 18 sont comparables en termes de débit atteignable à ceux obtenus avec la première forme de réalisation des étapes 200 et 202 (figures 5 et 6). Ces résultats peuvent apparaître moins satisfaisants en termes de discrétion, du fait que le signal a été utilisé dans toute la bande 0-4 kHz et sans pondération d'amplitude, les sauts entre sous-intervalles créant un bruit large bande qui apparaît en observant finement les figures 17 et 18. Une pondération en amplitude permet d'améliorer la situation.

Il convient de noter que la ressemblance entre le signal modifié (figure 18) et le signal initial (figure 17) est excellente de sorte qu'il est difficile de détecter que le signal initial a été modifié.

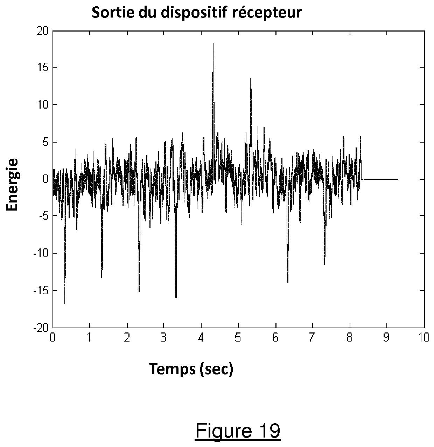

La figure 19 illustre la sortie du dispositif de réception obtenue pour le signal modifié de la figure 18. La figure 19 montre un ensemble de pics espacés de 1 seconde et d'amplitudes proches de +1 ou -1, à une constante multiplicative près, correspondant parfaitement à la séquence de huit bits émise (transmission sans erreur).

La deuxième forme de réalisation des étapes 200 et 202 présente l'avantage de fournir une clé stéganographique très riche. Il peut être utile de la rendre plus robuste au doppler, en compensant le résidu de porteuse comme dans la première forme de réalisation de ces étapes 200 et 202, et /ou en compensant en outre la dilation/compression du signal complexe bande de base autour de la porteuse (enveloppe) avec une précision de l'ordre de l'échantillon temporel.

Dans les modes de réalisation où l'antenne de réception comprend plusieurs hydrophones 12, le procédé de réception décrit en relation avec la figure 8 peut être appliqué en parallèle aux signaux correspondant à l'ensemble des voies formées (par exemple, les voies peuvent être formées sur tout l'horizon en l'absence d'information a priori sur la position de l'émetteur).

L'invention permet ainsi de réémettre un signal préalablement enregistré et modifié de manière à porter de l'information grâce à l'ajout d'information au moyen d'un signal auxiliaire calculé à partir du signal initial et de l'information à cacher, selon l'opérateur de transformation qui dépend d'une clé stéganographique, la connaissance de cette clé étant nécessaire pour détecter qu'une information est cachée et retrouver cette information.

Le système de communication 100 peut utiliser des signaux naturels (tels que les bruits biologiques, les travaux sous-marins, le bruit ambiant, etc.) et les modifier de manière imperceptible pour y inclure de l'information (par exemple, courts messages, de type SMS). L'accès à l'information cachée n'est possible qu'en utilisant la clé stéganographique connue seulement de l'émetteur et du récepteur.

Par conséquent, le signal émis apparaît à tout tiers parfaitement naturel et peut être parfaitement adapté à la zone d'émission et au moment de l'émission (par exemple si le signal initial a été recueilli sur la zone quelques minutes ou quelques heures avant sa ré-émission).

L'utilisation d'une pondération d'amplitude p(t) en émission et/ou réception permet de limiter les transitoires large bande aux transitions entre sous-intervalles et rendre plus discrète l'insertion d'information.

Le système de communication 100 peut s'appliquer à tous types de signaux à large bande, ce qui est le cas de nombreux signaux constitutifs du bruit ambiant sous-marin.

Bien qu'il ne soit pas limité à un tel environnement, le système de communication 100 est particulièrement adapté à un environnement fortement bruité et peut être rendu insensible au doppler.

L'invention n'est pas limitée aux modes de réalisation décrits ci-avant à titre d'exemple non limitatif. Elle englobe toutes les variantes de réalisation qui pourront être envisagées par l'homme du métier.

**Revendications**

1. Dispositif émetteur (101), comprenant une antenne d'émission, l'antenne d'émission comprenant au moins un transducteur et une unité de génération de signal (120) pour générer un signal de communication acoustique à émettre vers un dispositif récepteur incluant de l'information cachée, **caractérisé en ce que** l'unité de génération de signal est configurée pour enregistrer au préalable un signal acoustique d'origine, l'unité de génération de signal (120) étant configurée pour diviser au préalable la durée totale d'un signal initial x(t) dérivé du signal d'origine en un ensemble d'intervalles de temps successifs jointifs de même durée T, chaque intervalle de durée T étant divisé en 2M sous-intervalles $U_k$ : $U_{-M}$, .... $U_{-1}$, $U_1$, ..,. $U_M$, séparés par des intervalles de garde, lesdits sous-intervalles ayant des durées croissantes en fonction de la valeur absolue de k, ledit signal de communication y(t) à émettre étant égal à la somme du signal initial x(t) et d'un signal auxiliaire $\Psi(x)(t)$, préalablement multiplié par $\alpha.a_n$, $\alpha$ désignant un paramètre de gain < 1, choisi suffisamment faible pour que le signal y(t) soit proche du signal x(t), et $a_n$ désignant un symbole d'informations à transmettre correspondant au $n^{ième}$ intervalle, ledit symbole $a_n$ ayant une phase et/ou une amplitude portant l'information cachée, ledit signal auxiliaire $\Psi(x)(t)$ étant calculé à partir du signal initial x(t) au moyen d'un opérateur de transformation $\Psi$ choisi, l'opérateur de transformation étant défini sur chaque intervalle parmi lesdits intervalles à partir d'un paramètre de phase exp j.$\beta k$, le paramètre de phase dépendant d'un ensemble de phases $\beta k$ constituant une clé stéganographique, l'opérateur de transformation étant appliqué au signal initial sur chaque sous-intervalle $U_k$ pour calculer la valeur du signal auxiliaire correspondante sur ledit intervalle, la valeur du signal auxiliaire $\Psi(x)(T/2 + t)$ à un instant T/2 +t, avec t appartient à un sous-intervalle $U_k$, étant égale à :

$$\Psi(x)\ (T/2 + t) = \exp j.\beta_k\ .p(t)\ .\ x(T/2 - t),$$

$\beta_k$ étant compris dans l'intervalle [0, $2\pi$] et p(t) étant une fonction de pondération d'amplitude à l'instant t.

2. Dispositif émetteur selon la revendication 1, **caractérisé en ce que** le signal initial x(t) dérivé du signal d'origine est le signal complexe en bande de base obtenu après filtrage du signal d'origine dans une bande de fréquences de largeur choisie, centrée sur une fréquence centrale.

3. Dispositif émetteur selon l'une des revendications précédentes, **caractérisé en ce que** la durée des intervalles de garde entre les sous-intervalles de temps successifs $U_k$ et $U_{k+1}$ est choisie de sorte que chacun des sous-intervalles $U_k$ ne recouvre pas ses voisins après dilatation/compression due à un phénomène doppler.

4. Dispositif émetteur (101), comprenant une antenne d'émission, l'antenne d'émission comprenant au moins un transducteur et une unité de génération de signal (120) pour générer un signal de communication acoustique à émettre vers un dispositif récepteur incluant de l'information cachée, **caractérisé en ce que** l'unité de génération de signal est configurée pour enregistrer au préalable un signal acoustique d'origine, l'unité de génération de signal (120) étant configurée pour diviser au préalable la durée totale d'un signal initial x(t) dérivé du signal d'origine en un ensemble d'intervalles de temps successifs jointifs de même durée T, l'unité de génération de signal étant en outre configurée pour diviser chaque intervalle de durée T en un ensemble de M sous-intervalles de même durée T/M, ledit signal de communication y(t) étant égal à la somme du signal initial x(t) et d'un signal auxiliaire $\Psi(x)(t)$, préalablement multiplié par $\alpha.a_n$, $\alpha$ désignant un paramètre de gain < 1, choisi suffisamment faible pour que le signal y(t) soit proche du signal x(t), et $a_n$ désignant un symbole d'informations à transmettre correspondant au $n^{ième}$ intervalle, ledit symbole $a_n$ ayant une phase et/ou une amplitude portant l'information cachée, ledit signal auxiliaire $\Psi(x)(t)$ étant calculé à partir du signal initial x(t) au moyen d'un opérateur de transformation $\Psi$ choisi, l'opérateur de transformation étant défini sur chaque intervalle parmi lesdits intervalles à partir d'un paramètre de phase exp j.$\beta$k, le paramètre de phase dépendant d'un ensemble de phases $\beta$k constituant une clé stéganographique, la valeur du signal auxiliaire à un instant t appartenant à un sous-intervalle de temps donné étant obtenue à partir de la valeur du signal initial sur un autre sous-intervalle, à l'instant t ou -t.

5. Dispositif émetteur selon la revendication 4, **caractérisé en ce que** la valeur du signal auxiliaire à un instant t appartenant à un sous-intervalle de temps donné est obtenue à partir de la valeur du signal initial sur un autre sous-intervalle pondérée par la valeur d'une fonction de pondération d'amplitude p(t) à l'instant t.

6. Dispositif récepteur (102) comprenant une antenne de réception, l'antenne de réception comprenant au moins un hydrophone, **caractérisé en ce qu'**il comprend un détecteur (151) pour détecter un signal de communication émis par un dispositif émetteur (101) selon l'une des revendications 1 à 5 et une unité d'extraction (152) configurée pour reconstituer le signal auxiliaire en appliquant ledit opérateur de transformation au signal de communication détecté à partir de la clé stéganographique, et pour extraire l'information cachée à partir de la phase et/ou de l'amplitude du signal auxiliaire reconstruit.

7. Dispositif récepteur selon la revendication 6, **caractérisé en ce que** l'unité d'extraction est en outre configurée pour appliquer un filtre au signal reconstitué à partir d'un terme de compensation $e^{-i\widehat{\theta u}}$ propre à compenser le résidu de la porteuse correspondant à l'écart entre la fréquence porteuse avec doppler et la fréquence porteuse nominale, le terme de compensation étant estimé en maximisant, à chaque instant t, le module de la sortie z(t) du filtre pour un ensemble de valeurs possibles de $\theta$, et **en ce que** la fonction d'extraction est apte à déterminer les symboles et les bits de l'information cachée à partir des phases du signal z(t) calculées à des instants correspondants aux maximas du module du signal z(t).

8. Système de communication comprenant un dispositif émetteur selon l'une des revendications 1 à 5 et un dispositif récepteur selon l'une des revendications 6 et 7.

9. Procédé d'émission pour générer un signal de communication acoustique dans un dispositif émetteur (101), comprenant une antenne d'émission (1), l'antenne d'émission comprenant au moins un transducteur, le procédé comprenant les étapes suivantes :

    - enregistrer un signal acoustique d'origine ;
    - diviser au préalable la durée totale d'un signal initial x(t) dérivé du signal d'origine en un ensemble d'intervalles de temps successifs jointifs de même durée T, chaque intervalle de durée T étant divisé en 2M sous-intervalles $U_k$ : $U_{-M}$, ..., $U_{-1}$, $U_1$, ... $U_M$, séparés par des intervalles de garde, lesdits sous-intervalles ayant des durées croissantes en fonction de la valeur absolue de k ;
    - ajouter à un signal initial x(t), dérivé dudit signal d'origine, un signal auxiliaire $\Psi(x)(t)$ multiplié par $\alpha.a_n$, $\alpha$

désignant un paramètre de gain <1, choisi suffisamment faible pour que le signal y(t) soit proche du signal x(t), et $a_n$ désignant un symbole d'informations à transmettre $a_n$ correspondant au nième intervalle, ledit symbole $a_n$ ayant une phase et/ou une amplitude portant l'information cachée, ledit signal auxiliaire $\Psi(x)(t)$ étant calculé à partir du signal initial x(t) au moyen d'un opérateur de transformation $\Psi$ choisi, l'opérateur de transformation étant défini sur chaque intervalle parmi lesdits intervalles à partir d'un paramètre de phase exp j.$\beta$k, le paramètre de phase dépendant d'un ensemble de phases $\beta$k constituant une clé stéganographique, ce qui fournit un signal de communication y(t),
- émettre un signal vers un dispositif récepteur à partir du signal de communication y(t),

l'opérateur de transformation étant appliqué au signal initial sur chaque sous-intervalle $U_k$ pour calculer la valeur du signal auxiliaire correspondante sur ledit intervalle, la valeur du signal auxiliaire $\Psi(x)(T/2 + t)$ à un instant T/2 +t, avec t appartient à un sous-intervalle $U_k$, étant égale à :
$\Psi(x) (T/2 + t) = \exp j.\beta_k.p(t).x(T/2 - t)$, avec $\beta_k$ compris dans l'intervalle $[0, 2\pi]$ et p(t) est une fonction de pondération d'amplitude à l'instant (t).

10. Procédé d'émission pour générer un signal de communication acoustique dans un dispositif émetteur (101), comprenant une antenne d'émission (1), l'antenne d'émission comprenant au moins un transducteur, le procédé comprenant les étapes suivantes :

- enregistrer un signal acoustique d'origine ;
- diviser au préalable la durée totale d'un signal initial x(t) dérivé du signal d'origine en un ensemble d'intervalles de temps successifs jointifs de même durée T, l'unité de génération de signal étant en outre configurée pour diviser chaque intervalle de durée T en un ensemble de M sous- intervalles de même durée T/M,
- ajouter à un signal initial x(t), dérivé dudit signal d'origine, un signal auxiliaire $\Psi(x)(t)$, préalablement multiplié par $\alpha.a_n$, $\alpha$ désignant un paramètre de gain < 1, choisi suffisamment faible pour que le signal y(t) soit proche du signal x(t), et $a_n$ désignant un symbole d'informations à transmettre correspondant au nième intervalle, ledit symbole $a_n$ ayant une phase et/ou une amplitude portant l'information cachée, ledit signal auxiliaire $\Psi(x)(t)$ étant calculé à partir du signal initial x(t) au moyen d'un opérateur de transformation $\Psi$ choisi, l'opérateur de transformation étant défini sur chaque intervalle parmi lesdits intervalles à partir d'un paramètre de phase exp j.$\beta$k, le paramètre de phase dépendant d'un ensemble de phases $\beta$k constituant une clé stéganographique, ce qui fournit un signal de communication y(t),
- émettre un signal vers un dispositif récepteur à partir du signal de communication y(t),

et en ce que la valeur du signal auxiliaire à un instant t appartenant à un sous-intervalle de temps donné est obtenue à partir de la valeur du signal initial sur un autre sous-intervalle, à l'instant t ou -t.

11. Procédé selon la revendication 10, **caractérisé en ce que** la valeur du signal auxiliaire à un instant t appartenant à un sous-intervalle de temps donné est obtenue à partir de la valeur du signal initial sur un autre sous-intervalle pondérée par la valeur d'une fonction de pondération d'amplitude p(t) à l'instant t.

**Patentansprüche**

1. Sendevorrichtung (101), umfassend eine Sendeantenne, wobei die Sendeantenne mindestens einen Wandler und eine Signalerzeugungseinheit (120) zum Erzeugen eines an eine Empfangsvorrichtung zu sendenden, versteckte Informationen einschließenden akustischen Kommunikations signals umfasst, **dadurch gekennzeichnet, dass** die Signalerzeugungseinheit konfiguriert ist, um im Vorfeld ein akustisches Ursprungssignal aufzuzeichnen, wobei die Signalerzeugungseinheit (120) konfiguriert ist, um im Vorfeld die Gesamtdauer eines Anfangssignals x(t), welches von dem Ursprungssignal abgeleitet ist, in eine Gruppe von aufeinanderfolgenden, aneinandergrenzenden Zeitintervallen gleicher Dauer T zu unterteilen, wobei jedes Intervall der Dauer T in 2M Teilintervalle $U_k$ unterteilt ist: $U_{-M}$, ..., $U_{-1}$, $U_1$, ..., $U_M$, voneinander getrennt durch Schutzintervalle, wobei die Teilintervalle aufsteigende Dauern entsprechend dem Absolutwert von k aufweisen, wobei das zu sendende Kommunikationssignal y(t) gleich der Summe des Anfangssignals x(t) und eines Hilfssignals $\Psi(x)(t)$ ist, das zuvor mit $\alpha.a_n$ multipliziert wurde, wobei $\alpha$ einen Verstärkungsparameter < 1 bezeichnet, welcher gering genug gewählt wird, damit das Signal y(t) nahe dem Signal x(t) ist, und wobei $a_n$ ein Symbol für zu übertragende Informationen bezeichnet, welches dem n-ten Intervall entspricht, wobei das Symbol $a_n$ eine Phase und/oder eine Amplitude aufweist, welche die versteckte Information trägt, wobei das Hilfssignal $\Psi(x)(t)$ anhand des Ausgangssignals x(t) mithilfe eines gewählten Umwandlungsoperators $\Psi$ berechnet wird, wobei der Umwandlungsoperator in jedem Intervall von den Intervallen anhand eines Phasenparameters exp j.βk definiert wird, wobei der Phasenparameter von einer Gruppe von Phasen βk abhängt, welche einen steganografischen Schlüssel darstellt, wobei der Umwandlungsoperator auf das Anfangssignal in jedem Teilintervall $U_k$ angewendet wird, um den entsprechenden Wert des Hilfssignals über das Intervall zu berechnen, wobei der Wert des Hilfssignals Ψ(x)(T/2 + t) zu einem Zeitpunkt T/2 +t, in dem t zu einem Teilintervall $U_k$ gehört, sich aus folgender Gleichung ergibt:

$$\Psi(x)\,(T/2 + t) = \exp j.\beta_k\,.p(t)\,.\,x(T/2 - t),$$

wobei $\beta_k$, in dem Intervall [0, $2_\pi$] enthalten ist und p(t) eine Gewichtungsfunktion der Amplitude zum Zeitpunkt t ist.

2. Sendevorrichtung nach Anspruch 1, **dadurch gekennzeichnet, dass** das von dem Ursprungssignal abgeleitete Anfangssignal x(t) das komplexe Signal im Basisband ist, welches nach Filterung des Ursprungssignals in einem Frequenzband gewählter Breite erzielt wird, welche auf eine Mittelfrequenz zentriert ist.

3. Sendevorrichtung nach einem der vorhergehenden Ansprüche, **dadurch gekennzeichnet, dass** die Dauer der Schutzintervalle zwischen den aufeinanderfolgenden Zeit-Teilintervallen $U_k$ und $U_{k+1}$ so gewählt ist, dass jedes der Teilintervalle $U_k$ seinen Nachbarn nach Ausdehnung/Kompression aufgrund eines Doppler-Phänomens nicht überlagert.

4. Sendevorrichtung (101), umfassend eine Sendeantenne, wobei die Sendeantenne mindestens einen Wandler und eine Signalerzeugungseinheit (120) zum Erzeugen eines an eine Empfangsvorrichtung zu sendenden, versteckte Informationen einschließenden akustischen Kommunikationssignals umfasst, **dadurch gekennzeichnet, dass** die Signalerzeugungseinheit konfiguriert ist, um im Vorfeld ein akustisches Ursprungssignal aufzuzeichnen, wobei die Signalerzeugungseinheit (120) konfiguriert ist, um im Vorfeld die Gesamtdauer eines Anfangssignals x(t), welches vom Ursprungssignals abgeleitet wird, in eine Gruppe von aufeinanderfolgenden, aneinandergrenzenden Zeitintervallen gleicher Dauer T zu unterteilen, wobei die Signalerzeugungseinheit ferner konfiguriert ist, um jedes Intervall der Dauer T in eine Gruppe von M Teilintervallen gleicher Dauer T/M zu unterteilen, wobei das Kommunikationssignal y(t) gleich der Summe des Anfangssignals x(t) und eines Hilfssignals Ψ(x)(t) ist, welches im Vorfeld mit $\alpha.a_n$ multipliziert wurde, wobei $\alpha$ einen Verstärkungsparameter < 1 bezeichnet, welcher gering genug gewählt ist, damit das Signal y(t) nahe dem Signal x(t) ist, und wobei $a_n$ ein Symbol für zu übertragende Informationen bezeichnet, welches dem n-ten Intervall entspricht, wobei das Symbol $a_n$ eine Phase und/oder eine Amplitude aufweist, welche die versteckte Information trägt, wobei das Hilfssignal Ψ(x)(t) anhand des Eingangssignals x(t) mithilfe eines gewählten Umwandlungsoperators Ψberechnet wird, wobei der Umwandlungsoperator über jedes Intervall von den Intervallen anhand eines Phasenparameters exp j.βk definiert wird, wobei der Phasenparameter von einer Gruppe von Phasen βk abhängt, welche einen steganografischen Schlüssel darstellt, wobei der Wert des Hilfssignals zu einem Zeitpunkt t, welcher zu einem gegebenen Zeit-Teilintervall gehört, anhand des Wertes des Anfangssignals über ein anderes Teilintervall zum Zeitpunkt t oder -t erzielt wird.

5. Sendevorrichtung nach Anspruch 4, **dadurch gekennzeichnet, dass** der Wert des Hilfssignals zu einem Zeitpunkt t, welcher zu einem gegebenen Zeit-Teilintervall gehört, anhand des Wertes des Anfangssignals über ein anderes Teilintervall, gewichtet mit dem Wert einer Amplituden-Gewichtungsfunktion p(t) zum Zeitpunkt t, erzielt wird.

6. Empfangsvorrichtung (102), umfassend eine Empfangsantenne, wobei die Empfangsantenne mindestens ein Hydrophon umfasst, **dadurch gekennzeichnet, dass** sie einen Detektor (151) zum Detektieren eines durch eine Sendevorrichtung (101) nach einem der Ansprüche 1 bis 5 gesendeten Kommunikationssignals und eine Extraktionseinheit (152) umfasst, welche konfiguriert ist, um das Hilfssignal zu rekonstituieren, indem der Umwandlungsoperator auf das detektierte Kommunikationssignal anhand des steganografischen Schlüssels angewendet wird, und um die versteckten Informationen anhand der Phase und/oder der Amplitude des rekonstruierten Hilfssignals zu extrahieren.

7. Empfangsvorrichtung nach Anspruch 6, **dadurch gekennzeichnet, dass** die Extraktionseinheit ferner konfiguriert ist, um einen Filter auf das rekonstituierte Signal anhand eines Kompensationsterms $e^{-i\widehat{\theta u}}$ anzuwenden, welcher geeignet ist, um den Rest des Trägersignals zu kompensieren, welcher der Differenz zwischen der Trägerfrequenz mit Doppler und der Nenn-Trägerfrequenz entspricht, wobei der Kompensationsterm geschätzt wird, indem zu jedem Zeitpunkt t das Modul des Ausgangs z(t) des Filters für eine Gruppe von möglichen Werten von θ geschätzt wird, und indem die Extraktionsfunktion in der Lage ist, die Symbole und die Bits der versteckten Informationen anhand der Phasen des Signals z(t) zu bestimmen, welche zu entsprechenden Zeitpunkten bei Maxima des Moduls des Signals z(t) berechnet werden.

8. Kommunikationssystem, umfassend eine Sendevorrichtung nach einem der Ansprüche 1 bis 5 und eine Empfangsvorrichtung nach einem der Ansprüche 6 und 7.

9. Sendeverfahren zum Erzeugen eines akustischen Kommunikationssignals in einer Sendevorrichtung (101), umfassend eine Sendeantenne (1), wobei die Sendeantenne mindestens einen Wandler umfasst, wobei das Verfahren folgende Schritte umfasst:

   - Aufzeichnen eines akustischen Ursprungssignals;
   - im Vorfeld, Unterteilen der Gesamtdauer eines Anfangssignals x(t), welches vom Ursprungs signals abgeleitet wird, in eine Gruppe von aufeinanderfolgenden, aneinandergrenzenden Zeitintervallen gleicher Dauer T, wobei jedes Zeitintervall der Dauer T in 2M Teilintervalle $U_k$ unterteilt ist: $U_{-M}$, ..., $U_{-1}$, $U_1$, ..., $U_M$, voneinander getrennt durch Schutzintervalle, wobei die Teilintervalle aufsteigende Dauern entsprechend dem Absolutwert von k aufweisen;
   - Hinzufügen, zu einem Anfangssignal x(t), welches von dem Ursprungssignal abgeleitet ist, eines Hilfssignals $\Psi(x)(t)$, das mit $\alpha.a_n$ multipliziert wurde, wobei a einen Verstärkungsparameter <1 bezeichnet, welcher gering genug gewählt ist, damit das Signal y(t) nahe dem Signal x(t) ist, und wobei $a_n$ ein Symbol für zu übertragende Informationen $a_n$ bezeichnet, welches dem n-ten Intervall entspricht, wobei das Symbol $a_n$ eine Phase und/oder eine Amplitude aufweist, welche die versteckten Informationen trägt, wobei das Hilfssignal $\Psi(x)(t)$ anhand des Eingangssignals x(t) mithilfe eines gewählten Umwandlungsoperators $\Psi$ berechnet wird, wobei der Umwandlungsoperator über jedes Intervall von den Intervallen anhand eines Phasenparameters exp j.βk definiert wird, wobei der Phasenparameter von einer Gruppe von Phasen βk abhängt, welche einen steganografischen Schlüssel darstellt, was ein Kommunikationssignal y(t) bereitstellt,
   - Senden eines Signals an eine Empfangsvorrichtung anhand des Kommunikationssignals y(t),

   wobei der Umwandlungsoperator auf das Anfangssignal über jedes Teilintervall $U_k$ angewendet wird, um den entsprechenden Wert des Hilfssignals über das Intervall zu berechnen, wobei der Wert des Hilfssignals $\Psi(x)(T/2 + t)$ zu einem Zeitpunkt T/2 +t, wobei t zu dem Teilintervall $U_k$ gehört, durch folgende Gleichung ausgedrückt wird:
   $\Psi(x)(T/2 + t) = \exp j.\beta_k.p(t).x(T/2 - t)$, wobei βk in dem Intervall $[0, 2_\pi]$ enthalten ist und p(t) eine Ampliduden-Gewichtungsfunktion zum Zeitpunkt (t) ist.

10. Sendeverfahren zum Erzeugen eines akustischen Kommunikationssignals in einer Sendevorrichtung (101), umfassend eine Sendeantenne (1), wobei die Sendeantenne mindestens einen Wandler umfasst, wobei das Verfahren folgende Schritte umfasst:

   - Aufzeichnen eines akustischen Ursprungssignals;
   - im Vorfeld, Unterteilen der Gesamtdauer eines Anfangssignals x(t), welches vom Ursprungs signals abgeleitet wird, in eine Gruppe von aufeinanderfolgenden, aneinandergrenzenden Zeitintervallen gleicher Dauer T, wobei die Signalerzeugungseinheit ferner konfiguriert ist, um jedes Intervall der Dauer T in eine Gruppe von M Teilintervallen gleicher Dauer T/M zu unterteilen,
   - Hinzufügen, zu einem Anfangssignal x(t), welches von dem Ursprungssignal abgeleitet ist, eines Hilfssignals $\Psi(x)(t)$, das im Vorfeld mit $\alpha.a_n$ multipliziert wurde, wobei a einen Verstärkungsparameter <1 bezeichnet, welcher gering genug gewählt ist, damit das Signal y(t) nahe dem Signal x(t) ist, und wobei $a_n$ ein Symbol für zu übertragende Informationen bezeichnet, welches dem n-ten Intervall entspricht, wobei das Symbol $a_n$ eine Phase und/oder eine Amplitude aufweist, welche die versteckten Informationen trägt, wobei das Hilfssignal $\Psi(x)(t)$ anhand des Eingangssignals x(t) mithilfe eines gewählten Umwandlungsoperators $\Psi$ berechnet wird, wobei der Umwandlungsoperator über jedes Intervall von den Intervallen anhand eines Phasenparameters exp j.βk definiert wird, wobei der Phasenparameter von einer Gruppe von Phasen βk abhängt, welche einen steganografischen Schlüssel darstellt, was ein Kommunikationssignal y(t) bereitstellt,
   - Senden eines Signals an eine Empfangsvorrichtung anhand des Kommunikationssignals y(t),

   und dadurch, dass der Wert des Hilfssignals zu einem Zeitpunkt t, welcher zu einem gegebenen Zeit-Teilintervall gehört, anhand des Wertes des Anfangssignals über ein anderes Teilintervall zu einem Zeitpunkt t oder -t erzielt wird.

**11.** Verfahren nach Anspruch 10, **dadurch gekennzeichnet, dass** der Wert des Hilfssignals zu einem Zeitpunkt t, welcher zu einem gegebenen Zeit-Teilintervall gehört, anhand des Wertes des Anfangssignals über ein anderes Teilintervall, gewichtet mit dem Wert einer Amplituden-Gewichtungsfunktion p(t) zum Zeitpunkt t, erzielt wird.

**Claims**

**1.** A transmitter device (101), comprising a transmission antenna, the transmission antenna comprising at least one transducer and one signal generation unit (120) for generating an acoustic communication signal to be transmitted to a receiver device including hidden information, **characterized in that** the signal generation unit is configured to previously record an original acoustic signal, wherein the signal generation unit (120) is configured to previously divide the total duration of an initial signal x(t) derived from the original signal into a set of contiguous successive time intervals of the same duration T, each interval of duration T being divided into 2M sub-intervals $U_k$: $U_{-M}$, ..., $U_{-1}$, $U_1$, ..., $U_M$, separated by guard intervals, said sub-intervals having increasing durations as a function of the absolute value of k, said communication signal y(t) to be transmitted being equal to the sum of the initial signal x(t) and an auxiliary signal $\Psi(x)(t)$, previously multiplied by $\alpha.a_n$, where $\alpha$ denotes a gain parameter <1, chosen to be low enough for the signal y(t) to be close to the signal x(t), and where $a_n$ denotes an information symbol to be transmitted corresponding to the $n^{th}$ interval, said symbol $a_n$ having a phase and/or an amplitude carrying the hidden information, said auxiliary signal $\Psi(x)(t)$ being calculated from the initial signal x(t) by means of a chosen transformation operator $\Psi$, the transformation operator being defined on each of said intervals from a phase parameter exp $j.\beta_k$, the phase parameter depending on a set of phases $\beta_k$ forming a steganographic key, the transformation operator being applied to the initial signal in each sub-interval $U_k$ in order to calculate the value of the corresponding auxiliary signal in said interval, the value of the auxiliary signal $\Psi(x)(T/2 + t)$ at a time T/2 + t, where t belongs to a sub-interval $U_k$, being equal to:

$$\Psi(x)\,(T/2 + t) = \exp j.\beta_k\,.p(t)\,.\,x(T/2 - t),$$

$\beta_k$ being comprised in the interval $[0, 2_\pi]$ and p(t) being an amplitude weighting function at time t.

**2.** The transmitter device according to claim 1, **characterized in that** the initial signal x(t) derived from the original signal is the complex baseband signal obtained after filtering the original signal in a frequency band of chosen width, centered on a central frequency.

**3.** The transmitter device according to one of the preceding claims, **characterized in that** the duration of the guard intervals between the sub-intervals of successive times $U_k$ and $U_{k+1}$ is chosen such that each of the sub-intervals $U_k$ does not overlap with its neighbors after dilatation/compression due to a Doppler phenomenon.

**4.** A transmitter device (101), comprising a transmission antenna, the transmission antenna comprising at least one transducer and one signal generation unit (120) for generating an acoustic communication signal to be transmitted to a receiver device including hidden information, **characterized in that** the signal generation unit is configured to previously record an original acoustic signal, wherein the signal generation unit (120) is configured to previously divide the total duration of an initial signal x(t) derived from the original signal into a set of contiguous successive time intervals of the same duration T, wherein the signal generation unit is further configured to divide each interval of duration T into a set of M sub-intervals of the same duration T/M, said communication signal y(t) being equal to the sum of the initial signal x(t) and an auxiliary signal $\Psi(x)(t)$, previously multiplied by $\alpha.a_n$, where $\alpha$ denotes a gain parameter <1, chosen to be low enough for the signal y(t) to be close to the signal x(t), and where $a_n$ denotes an information symbol to be transmitted corresponding to the $n^{th}$ interval, said symbol $a_n$ having a phase and/or an amplitude carrying the hidden information, said auxiliary signal $\Psi(x)(t)$ being calculated from the initial signal x(t) by means of a chosen transformation operator $\Psi$, the transformation operator being defined on each of said intervals from a phase parameter exp $j.\beta_k$, the phase parameter depending on a set of phases $\beta_k$ forming a steganographic key, the value of the auxiliary signal at a time t belonging to a given sub-interval of time being obtained from the value of the initial signal in another sub-interval at time t or -t.

**5.** The transmitter device according to claim 4, **characterized in that** the value of the auxiliary signal at a time t belonging to a given sub-interval of time is obtained from the value of the initial signal in another sub-interval weighted by the value of an amplitude weighting function p(t) at time t.

6. A receiver device (102), comprising a receiving antenna, the receiving antenna comprising at least one hydrophone, **characterized in that** it comprises a detector (151) for detecting a communication signal transmitted by a transmitter device (101) according to one of claims 1 to 5 and an extraction unit (152) configured to reconstruct the auxiliary signal by applying said transformation operator to the detected communication signal from the steganographic key, and to extract the hidden information from the phase and/or the amplitude of the reconstructed auxiliary signal.

7. The receiver device according to claim 6, **characterized in that** the extraction unit is further configured to apply a filter to the reconstructed signal on the basis of a compensation term $e^{-i\widehat{\theta u}}$ capable of compensating for the residual of the carrier corresponding to the difference between the carrier frequency with Doppler and the nominal carrier frequency, the compensation term being estimated by maximizing, at each time t, the modulus of the output z(t) of the filter for a set of possible values of $\theta$, and **in that** the extraction function is capable of determining the symbols and the bits of the hidden information from the phases of the signal z(t) that are calculated at times corresponding to the maxima of the modulus of the signal z(t).

8. A communication system comprising a transmitter device according to one of claims 1 to 5 and a receiver device according to one of claims 6 and 7.

9. A transmission method for generating an acoustic communication signal in a transmitter device (101), comprising a transmitting antenna (1), the transmitting antenna comprising at least one transducer, the method comprising the following steps:

    - recording an original acoustic signal;
    - previously dividing the total duration of an initial signal x(t) derived from the original signal into a set of contiguous successive time intervals of the same duration T, each interval of duration T being divided into 2M sub-intervals Uk : U-M, ..., U-1, U1, ..., UM, separated by guard intervals, said sub-intervals having increasing durations as a function of the absolute value of k;
    - adding, to an initial signal x(t) derived from said original signal, an auxiliary signal $\Psi$(x)(t) multiplied by $\alpha.a_n$, where $\alpha$ denotes a gain parameter <1, chosen to be low enough for the signal y(t) to be close to the signal x(t), and where $a_n$ denotes an information symbol to be transmitted corresponding to the $n^{th}$ interval, said symbol $a_n$ having a phase and/or an amplitude carrying the hidden information, said auxiliary signal $\Psi$(x)(t) being calculated from the initial signal x(t) by means of a chosen transformation operator $\Psi$, the transformation operator being defined on each of said intervals from a phase parameter $\exp j.\beta_k$, the phase parameter depending on a set of phases $\beta_k$ forming a steganographic key, thereby providing a communication signal y(t),
    - transmitting a signal to a receiver device from the communication signal y(t),

the transformation operator being applied to the initial signal in each sub-interval $U_k$ in order to calculate the corresponding value of the auxiliary signal in said interval, the value of the auxiliary signal $\Psi$(x)(T/2 + t) at a time T/2 + t, where t belongs to a sub-interval $U_k$, being equal to:

$\Psi$(x) (T/2 + t) = exp j.$\beta_k$ .p(t) . x(T/2 - t), $\beta_k$ being comprised in the interval [0, 2$_\pi$] and p(t) being an amplitude weighting function at time (t).

10. A transmission method for generating an acoustic communication signal in a transmitter device (101), comprising a transmitting antenna (1), the transmitting antenna comprising at least one transducer, the method comprising the following steps:

    - recording an original acoustic signal;
    - previously dividing the total duration of an initial signal x(t) derived from the original signal into a set of contiguous successive time intervals of the same duration T, wherein the signal generation unit is further configured to divide each interval of duration T into a set of M sub-intervals of the same duration T/M,
    - adding, to an initial signal x(t) derived from said original signal, an auxiliary signal $\Psi$(x)(t), previously multiplied by $\alpha.a_n$, where $\alpha$ denotes a gain parameter <1, chosen to be low enough that the signal y(t) is close to the signal x(t), and where $a_n$ denotes an information symbol to be transmitted corresponding to the $n^{th}$ interval, said symbol $a_n$ having a phase and/or an amplitude carrying the hidden information, said auxiliary signal $\Psi$(x)(t) being calculated from the initial signal x(t) by means of a chosen transformation operator $\Psi$, the transformation operator being defined on each of said intervals from a phase parameter $\exp j.\beta_k$, the phase parameter depending on a set of phases $\beta_k$ forming a steganographic key, thereby providing a communication signal y(t),

- transmitting a signal to a receiver device from the communication signal y(t),

and in that the value of the auxiliary signal at a time t belonging to a given sub-interval of time being obtained from the value of the initial signal in another sub-interval at time t or -t.

11. The method according to claim 10, **characterized in that** the value of the auxiliary signal at a time t belonging to a given sub-interval of time is obtained from the value of the initial signal in another sub-interval weighted by the value of an amplitude weighting function p(t) at time t.

Figure 1

Division de la durée du signal d'origine en un ensemble d'intervalles de temps de durée T(200)

Déterminer les signaux auxiliaires correspondant au signal d'origine sur chaque intervalles de temps au moyen de l'opérateur $\Psi$ (202)

Déterminer le signal à émettre y(t) sur le $n^{\text{ième}}$ intervalle (204)

<u>Figure 2</u>

0            T/2         T

$U_{-M}$          $U_{-1}$ $U_1$      $U_M$

## Figure 3

(a) Signal initial

$U_{-2}$    $U_{-1}$    $U_{1}$    $U_{2}$

(b) Signal après permutation signal entre $U_k$ et $U_{-k}$

(c) Signal après retournement temporel

(d) Signal résultant après produit par terme de phase ±1

(e) Signal résultant après pondération p(t) aux transitions entre sous-intervalles

Figure 4

**Signal Initial (sans données embarquées)**

Figure 5

**Signal modifié**

Figure 6

**Signal Initial (sans données embarquées)**

Figure 7

**Signal modifié**

Figure 8

Détermination du signal auxiliaire
reconstruit (300)

Calculer z(t) (302)

Rechercher des maximas séparés de T
dans |z(t)| (304)

Calculer les phases de z(t) (305)

Déterminer les symboles et les bits
transmis (306)

Figure 9

**Réponse d'impulsion de canal en bande limitée**

Figure 10

**Profil de retard en puissance en bande limitée**

Figure 11

**Sortie du dispositif récepteur- clics de cachalot**

Temps (sec)

Figure 12

**Sortie du dispositif récepteur- Bruits de pluie**

Temps (sec)

Figure 13

**Sortie du dispositif récepteur- clics de cachalot**

Figure 14

**Sortie du dispositif récepteur- Bruits de pluie**

Figure 15

(a) Signal initial

$U_1$                $U_2$                $U_3$

(b) Signal résultant après permutation (1,2,3) -> (2,1,3)

(c) Signal résultant après retournement temporel (2 et 3) et produit par un terme de phase -1 (1 et,3)

<u>Figure 16</u>

**Signal Initial (sans données embarquées)- sans bruit ajouté**

Figure 17

**Signal transmis(sans données incluses)- sans bruit**

Figure 18

**Sortie du dispositif récepteur**

Temps (sec)

Figure 19

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Covert underwater acoustic communication using whale noise masking on DSSS signal. **SONGZUO LIU et al.** 2013 MTS/IEEE OCEANS - BERGEN. IEEE, 10 Juin 2013
- **LIU SONGZUO ; LIU BINGJIE ; YIN YANLING ; QIAO GANG.** *M-ray covert underwater acoustic communication by mimicking delphin sounds,* 01 Janvier 2014
- **N. CVEJIC.** Algorithms for audio watermarking and steganograpphy. Academic dissertation University, 2004
- **R. WALKER.** *Audio Watermaking, BBC R&D White Paper,* Août 2004
- **K. GOPALAN.** Audio steganography using bit modification. *Proc. IEEE International Conférence on Acoustics, Speech, and Signal Processing, (ICASSP '03),* Avril 2003, vol. 2, 421-424
- **GOPALAN.** Audio Steganography for Covert Data Transmission by Imperceptible Tone Insertion. *Proc. the IASTED International Conférence on Communication Systems And Applications (CSA 2004),* 08 Juillet 2004

- **J.G. PROAKIS.** Digital Communications. Mc Graw Hill, 2001
- Détection of Spread Spectrum Transmission Using Fluctuations of Correlation Estimators. **G. BUREL.** IEEE-ISPACS. Novembre 2000
- **G. LEUS ; P. VAN WALREE.** Multiband OFDM for covert acoustic communications. *IEEE Journal on Selected Areas in Communications,* Décembre 2008, vol. 26 (9
- **STÉPHANE PENAUD ; PHILIPPE BOUYSSE ; JACQUES GUITTARD et al.** Potentialités des séquences d'étalement chaotiques pour l'amélioration du TEEB d'un système DS-CDMA asynchrone. *ANN. TELECOMMUN.,* 2003, vol. 58 (3-4
- **H.S. DOLS et al.** Covert underwater acoustic communication with marine mammals sounds. *Proc. UDT Europe,* 2008